# EUROPÄISCHE PATENTSCHRIFT

(11) **EP 2 293 692 B1**
(45) Veröffentlichungstag und Bekanntmachung des Hinweises auf die Patenterteilung: **15.02.2017**
(21) Anmeldenummer: 09772110.4
(22) Anmeldetag: 24.06.2009
(51) Int. Cl.: A23L 3/00, A23L 3/18, A23L 3/22

(54) **VERFAHREN SOWIE VORRICHTUNG ZUM PASTEURISIEREN EINES FLÜSSIGEN PRODUKTES**
METHOD AND DEVICE FOR PASTEURIZING A LIQUID PRODUCT
PROCÉDÉ ET DISPOSITIF DE PASTEURISATION D'UN PRODUIT LIQUIDE

(30) Priorität: 04.07.2008 DE 102008031368
(43) Veröffentlichungstag der Anmeldung: 16.03.2011
(73) Patentinhaber: KHS GmbH, 44143 Dortmund (DE)
(72) Erfinder: CLÜSSERATH, Ludwig, 55543 Bad Kreuznach (DE)
(86) Internationale Anmeldenummer: PCT/EP2009/004539
(87) Internationale Veröffentlichungsnummer: WO 2010/000410

(56) Entgegenhaltungen:
- EP-A1- 0 567 913
- WO-A1-00/67598
- WO-A1-91/15128
- WO-A1-2004/066756
- DE-C1- 10 018 741

## Beschreibung

Die Erfindung bezieht sich auf ein Verfahren gemäß Oberbegriff Patentanspruch 1 sowie auf eine Vorrichtung gemäß Oberbegriff Patentanspruch 8.

Das Pasteurisieren von Produkten und dabei insbesondere von Getränken oder anderen Lebensmitteln zur effektiven Abtötung von produktschädlichen Keimen und/oder Mikroorganismen ist bekannt. Hierbei wird das jeweilige Produkt auf eine Pasteurisationstemperatur beispielsweise im Bereich von 70 bis 80°C, bevorzugt im Bereich von 72 bis 75°C erhitzt und über eine Behandlungszeit, die auch als Soll-Heißhaltezeit bezeichnet werden kann, auf der Pasteurisationstemperatur gehalten, so dass es dann u.a. während dieser Behandlungs- oder Heißhaltezeit zu dem gewünschten effektiven Abtöten der produktschädigenden Keime und/oder Mikroorganismen kommt. Nach der Behandlung wird das Produkt rückgekühlt und kann dann als steriles Produkt einer weiteren Behandlung, beispielsweise einer Füllmaschine zum Abfüllen in Flaschen oder dergleichen Behälter zugeführt werden.

Bei bisher üblichen und bekannten Pasteurisationsanlagen ist die erforderliche Heißhaltezeit bei konstantem Produktdurchsatz des zu pasteurisierenden Produktes durch Festlegung einer entsprechenden Rohrstrecke erreicht, in der die Pasteurisationstemperatur aufrechterhalten wird. Nachteilig hierbei ist aber, dass sich die tatsächliche Behandlungs- oder Heißhaltezeit in Abhängigkeit von dem Produktdurchsatz, d.h. von der Durchflussmenge des Produktes je Zeiteinheit (beispielsweise in m³/h) verändert und eine Anlage daher so ausgelegt werden muss, dass selbst bei dem größtmöglichen Produktdurchsatz die erforderliche Soll-Heißhaltezeit noch eingehalten wird. Dies führt bei geringeren Produktdurchsätzen zwangsläufig zu einer erheblichen Verlängerung der Behandlungs- oder Heißhaltezeit, d.h. zu einer Überpasteurisation und damit zu einer erheblichen Belastung und zu einer erheblichen Beeinträchtigung der Qualität des jeweiligen Produktes.

Änderungen des Produktdurchsatzes können verschiedene Ursachen haben, beispielsweise sind derartige Änderungen durch Leistungswechsel einer der Pasteurisationsanlage nachgeschalteten Füllmaschine oder aber auch dadurch bedingt, dass mit ein und derselben Aniage Behälter unterschiedlicher Art und Größe für unterschiedliche Produkte verarbeitet werden usw.

Es wurde bereits versucht, durch Zwischenschaltung von Pufferspeichern zwischen der Pasteurisationsanlage und einer nachgeschalteten Füllmaschine Änderungen des Produktdurchsatzes auszugleichen und einer Überpasteurisation entgegen zu wirken, was allerdings in der Praxis nur sehr eingeschränkt gelingt unter anderem auch deshalb, weil das Volumen der Pufferspeicher aus wirtschaftlichen und räumlichen Gründen nicht beliebig gesteiaert werden kann.

Bekannt wurde beispielsweise auch eine Vorrichtung entsprechend der WO 00/67598. Diese Schrift schlägt vor, eine Verlängerung der Rohrleitung eines Pasteurs dadurch vorzunehmen, dass verschiedene, unterschiedlich lange Rohrleitungsabschnitte wechselweise in die, der Pasteurisation bzw. Heißhaltung dienenden Rohrleitung eingeschaltet werden, wodurch die Verweilzeit innerhalb des Pasteurs erhöht wird. Nachteilig an dieser Vorgehensweise ist, dass auch diese verschiedenen, zusätzlichen Rohrleltungsabschnitte gereinigt werden müssen, was einen erheblichen Aufwand bedeutet.

Ebenfalls bekannt wurde ein Lösungsvorschlag entsprechend der WO 2004/066756. Diese Schrift schlägt einen Pasteur vor, bei welchem zumindest ein Teilstrom des durch den Durchlauferhitzer strömenden Füllgutes im Kreislauf durch den Durchlauferhitzer fahren wird. Diese Vorgehensweise wird dadurch realisiert, dass eine Umlaufleitung zwei Abschnitte des Durchlauferhitzers mit einander verbindet, wobei das Füllgut einen Teil des Durchlauferhitzers erneut durchläuft. Die Anwendung dieser Vorgehensweise wird für Situationen vorgeschlagen, bei denen das Füllgut noch nicht ausreichend lange pasteurisiert ist.
Dieser Vorgehensweise haftet der Nachteil an, dass die Mengenleistung des Pasteurs in m³/h starken Schwankungen unterworfen ist.

Aufgabe der Erfindung ist es, ein Verfahren aufzuzeigen, mit welchem es möglich ist, auch bei erheblichen Änderungen des Produktdurchsatzes eine Über- oder Unterpasteurisation zu verhindern. Zur Lösung dieser Aufgabe ist ein Verfahren entsprechend dem Patentanspruch 1 ausgebildet. Eine Vorrichtung zum Durchführen des Verfahrens ist Gegenstand des Patentanspruches 7.

Der Erfindung liegt die Erkenntnis zugrunde, dass eine Überpasteurisation durch eine einfache Steuerung oder Regelung des Produktvolumens innerhalb des Behandlungsraumes, oder aber auch durch eine ergänzende oder ausschließliche Steuerung oder Regelung der Länge der Behandlungsstrecke, welche von dem Produkt während und zur Pasteurisation durchlaufen wird, wirksam verhindert werden kann.

Dabei ist es von besonderer Bedeutung, das im Pasteurisationsprozess befindliche Produktvolumen in Abhängigkeit von dem Produktdurchsatz, also der durch den Füller je Zeiteinheit abgenommenen Füllgutmenge, Steuern oder Regeln zu können, um die Soll-Heißhaltezeit optimal einhalten zu können.

Bei einer bevorzugten Ausführungsform der Erfindung erfolgt die Steuerung oder Regelung des Pasteurisationsprozesses dadurch, dass die Menge des im Pasteurisationsbehälter befindliche Produktmenge eingestellt wird, wobei es von besonderem Vorteil ist, wenn ebenfalls die Länge der Behandlungsstrecke entsprechend dem Produktdurchsatz der Füllmaschine je Zeiteinheit eingestellt wird. Schließlich wird erfindungsgemäß ein Pasteur für flüssige Produkte vorgestellt, welcher in seiner Leistung veränderbar ist.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figur an einem Ausführungsbeispiel näher erläutert.
Im einzelnen zeigt die
- Figur 1: in einem Querschnitt ein Ausführungsbeispiel einer erfindungsgemäßen Pasteurisationsanlage, und die
- Figur 2: eine besonders vorteilhafte Ausgestaltung eines wendelförmigen Leitelementes.

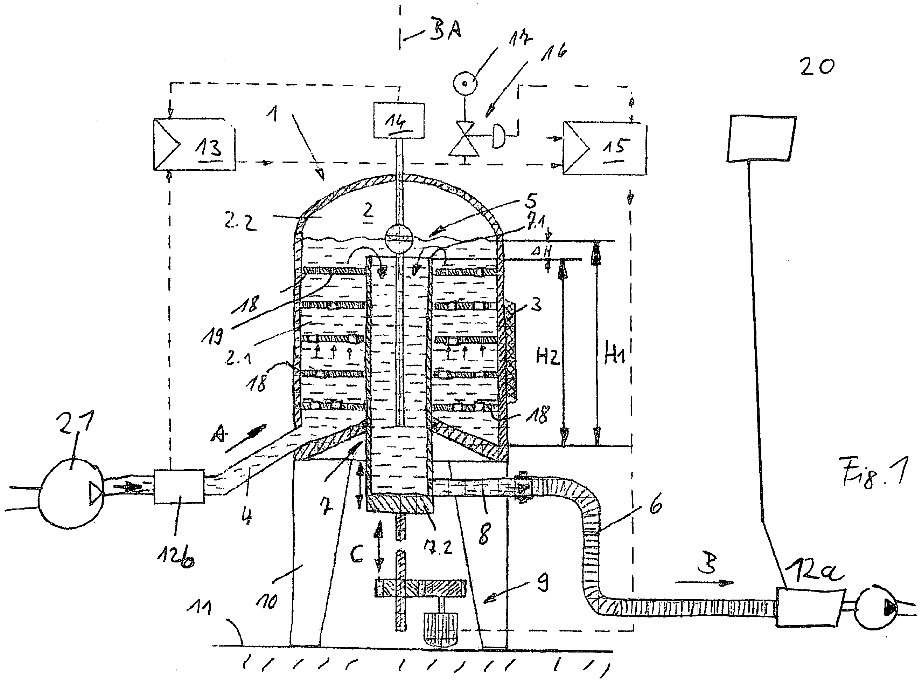

In der Figur 1 ist 1 der schematisch und im Schnitt dargestellte Pasteurisationsbehälter einer Pasteurisationsanlage zum Pasteurisieren eines flüssigen Produktes, beispielsweise eines Getränks. Der Behälter 1 ist bei der dargestellten Ausführungsform mit einer einen Behälterinnenraum 2 begrenzenden und eine vertikale Behälterachse BA umschließenden kreiszylinderförmigen Umfangswand 1.1, mit einem den Behälterinnenraum 2 an der Oberseite dicht verschließenden und an der Behälterinnenseite konkav gewölbten Behälterdeckel 1.2 und mit einem den Behälterinnenraum 2 an der Behälterunterseite verschließenden Behälterboden 1.3 ausgebildet, der bei der dargestellten Ausführungsform bezogen auf die Behälterachse BA kegelringartig geformt ist, und zwar mit der konvexen Innenseite dem Behälterinnenraum 2 zugewandt.

An der Außenfläche ist der Behälter 1 vorzugsweise mit einer geeigneten thermischen Isolierung 3 versehen, um im Behälterinnenraum 2 die für die Pasteurisation notwendige Temperatur bei geringem Energieeinsatz aufrecht zu erhalten.

Das zu pasteurisierende Produkt wird dem Behälter 1 bzw. einem Behälter- oder Produkteinlauf von einem nicht dargestellten Erhitzer über eine Leitung 4 entsprechend dem Pfeil A kontinuierlich zugeführt, und zwar im Bereich des Behälterbodens 1.3. Nach einer ausreichenden Soll-Heißhaltezeit wird das pasteurisierte Produkt über einen in der Figur allgemein mit 5 bezeichneten Produktauslauf und eine an diesen angeschlossene, zumindest teilweise flexiblen Leitung 6 entsprechend dem Pfeil B einer weiteren Behandlung, nämlich einem Rückkühler und anschließend einer Füllmaschine zugeführt. Zwischen dem Produktauslauf und der vorgesehenen Füllmaschine ist in besonders vorteilhaften Ausführungsformen ein Puffertank vorgesehen.

Über einen Stellantrieb 9, der beispielsweise einen Spindelantrieb mit einem Elektromotor oder ein hydraulisches Hubsystem usw. ist, ist das Rohr 7 in der Behälterachse BA verstellbar (Doppelpfeil C). Dabei ist es von besonderer Bedeutung, dass das Rohr 7 mit seiner Außenwandung die innerhalb der Trennbleche 18 angeordnete, zentrale Öffnung im Wesentlichen dicht verschließt, und damit die Länge des Produktweges vorgibt. Befindet sich das Rohr 7 in einer unteren Position, so gelangt das Produkt bereits nach dem Durchströmen eines relativ kurzen Strömungsweges in den Produktauslauf 5. In dieser Position befindet sich eine relativ geringe Produktmenge innerhalb des Pasteurisationsbehälters 1. Diese Einstellung ist bei geringem Produktdurchsatz je Zeiteinheit zu wählen. Befindet sich das Rohr 7 hingegen in einer oberen Position, so ist eine große Behandlungsstrecke eingestellt, und es befindet sich ein großes Produktvolumen im Pasteurisationsbe hälter 1. Diese Einstellung ist bei großem Produktdurchsatz je Zeiteinheit zu wählen.

Um den nötigen Raum für die Bewegung des Rohres 7 in der Behälterachse B1 sowie für die Unterbringung des Stellantriebes 9 zu schaffen, ist der Behälter 1 an der Unterseite mit Fußelementen 10 versehen, mit denen er auf einem Untergrund 11 aufsteht, und zwar mit dem Behälterboden 1.3 beabstandet von diesem Untergrund 11.

Während des Betriebes ist der Behälterinnenraum 2 teilweise mit dem heißen Produkt gefüllt, und zwar bis zu einem der Höhe H1 entsprechendem Höhenniveau, so dass im Behälter ein vom Produkt eingenommener Produktraum 2.1 und darüber ein vom Produkt nicht eingenommener Gasraum 2.2 gebildet sind. Der oberhalb dieses Höhenniveaus H1 gebildete Gasraum 2.2 ist mit einem vorzugsweise unter dem Druck P1 stehenden sterilen gas- und/oder dampfförmigen Medium, beispielsweise mit Stickstoff oder einem Inertgas gefüllt.

Der Auslass 5 ist bei der dargestellten Ausführungsform von einem achsgleich mit der Behälterachse BA angeordneten und durch den Behälterboden 1.3 hindurch geführten Rohr 7 gebildet, welches an seinem oberen, im Behälterinnenraum 2 angeordneten Ende 7.1 offen und an seinem unteren, aus dem Behälterinnenraum 2 herausgeführten und unterhalb des Behälterbodens 3.1 befindlichen Ende 7.2 verschlossen ist. Im Bereich des unteren Endes 7.2 ist das Rohr 7 mit einem Anschlussstutzen 8 versehen, an welchem die Leitung 6 angeschlossen ist. Der Durchtritt des Auslaufs 5 bzw. des diesen Auslauf bildenden Rohres 7 durch den Behälterboden 1.3 ist in geeigneter Weise abgedichtet. Aus mikrobiologischer Sicht besteht an sich keine Gefahr einer Kontamination des Produktes im Bereich dieser Durchführung, da das Produkt im Innenraum des Behälters 1 die für die effektive Pasteurisierung erforderliche Temperatur aufweist. Zusätzliche Absicherungen beispielsweise über Dampfsperren sind aber grundsätzlich möglich.

Um durch die Pasteurisation das gewünschte Abtöten von produktschädlichen Mikroorganismen und/oder Keimen sicher erzielen zu können, muss das Produkt wie bekannt, für eine gewisse Zeit auf der Pasteurisationstemperatur gehalten werden. Da die erforderliche Einwirkzeit unabhängig von dem zu pasteurisierenden Produktdurchsatz je Zeiteinheit ist, muss sich bei großem Produktdurchsatz je Zeiteinheit mehr Produkt im Pasteur befinden, als bei einer kleinen Produktmenge je Zeiteinheit. Erfindungsgemäß wird daher vorgeschlagen, die im Pasteur, bzw. im Pasteurisationsbehälter 1 befindliche Produktmenge in Abhängigkeit vom Produktdurchsatz je Zeiteinheit zu steuern oder zu regeln.

Die bloße Veränderung der im Pasteurisationsbehälter 1 befindlich Produktmenge in Abhängigkeit des Produktdurchsatzes je Zeiteinheit führt allerdings bei Verwendung der in Stand der Technik enthaltenen Pasteure, bei welchen eine, vorzugsweise dynamische Anpassung der Länge der Behandlungsstrecke nicht bekannt ist, zu unbefriedigenden Ergebnissen.

Befindet sich beispielsweise innerhalb eines Pasteurs ein größeres, frei bewegliches Produktvolumen, für welches kein zwingend einzuhaltender Strömungsweg vorgegeben ist, besteht permanent die Gefahr, dass zumindest ein Teilvolumen des zu pasteurisierenden Produktes direkt von seinem Einlauf in den Pasteur zum Produktauslauf 5 gelangt, wobei dieses Teilvolumen in einem solchen Fall nicht in der erforderlichen Weise pasteurisiert wurde. Aufgrund der damit verbundenen Nachteile und Gefahren, muss eine solche Möglichkeit sicher ausgeschlossen werden.

Auch hier schafft die vorliegende Erfindung Abhilfe und Verbesserung, wozu ein Pasteurisationsbehälter 1 mit variabler Länge der Behandlungsstrecke vorgeschlagen wird.

Beispielsweise wird das im Behälterinnenraum 2 enthaltene Produktvolumen zunächst in Abhängigkeit von dem Produktdurchsatz durch den Behälter 1 geregelt, d.h. in Abhängigkeit von dem je Zeiteinheit dem Behälter 1 zugeführten und/oder aus dem Behälter abgeführten Produktvolumen (m³/h). Die Regelung erfolgt dabei so, dass bei einer Reduzierung des Produktdurchsatzes auch das Volumen des vom Produkt im Behälter 1 eingenommenen Teilraumes 2.1 reduziert und bei einer Erhöhung des Produktdurchsatzes dieses Volumen erhöht wird.

In einer bevorzugten Ausführungsform der vorliegenden Erfindung erfolgt die Regelung beispielsweise derart, dass die Regelung in Abhängigkeit vom Produktdurchsatz der Füllmaschine erfolgt.

Die Anpassung der Produktmenge kann aber auch in Folge der Steuersignale einer, der Füllmaschine übergeordneten Anlagensteuerung erfolgen.

Signalisiert beispielsweise ein sinkender Füllstand innerhalb eines, der Füllmaschine vorgeschalteten Puffertanks, oder aber auch ein, in der Produktleitung angeordneter Durchflussmesser 12a einen größeren oder ansteigenden Produktdurchsatz der Füllmaschine, so muss die Menge des im Pasteurisationsbehälter 1 befindlichen Produktes erhöht werden. Dazu wird beispielsweise durch einen Rechner, welcher u.a. die Signale des Durchflussmessers 12a verarbeitet, durch geeignete Maßnahmen, beispielsweise durch die Ansteuerung einer zufördernden Pumpe 21, die Menge des Produktes innerhalb des Pasteurisationsbehälter erhöht.

In einer weiteren Ausführungsform der vorliegenden Erfindung erfolgt die Regelung des Höhenniveaus H1 durch entsprechendes Zuführen bzw. Ablassen des sterilen gas- und/oder dampfförmigen Mediums aus dem Gasraum 2.2, und zwar in einem geschlossenen Regelkreis. Hierfür ist in der Leitung 4 ein Durchflussmesser 12b vorgesehen, beispielsweise ein magnetisch induktiver Durchflussmesser, dessen Ausgangssignal einen Regler 13 zugeführt wird. Ein weiterer Eingang des Reglers 13 ist mit einem das tatsächliche Höhenniveau H1 des Produktspiegels im Behälter 1 erfassenden Sensor 14 verbunden. Der Ausgang des Reglers 13 ist mit einem Eingang eines weiteren Reglers 15 verbunden, der in Abhängigkeit von in diesem Regler abgelegten Steuer- oder Regelparametern das Höhenniveau H1 und damit das Volumen des von dem Produkt eingenommenen Teifraumes 2.1 sowie andererseits auch das Nachführen des Auslaufs 5 bzw. des Rohres 7, d.h. das Höhenniveau H2 steuert bzw. regelt. Hierfür ist der Regler 15 mit einem Ausgang mit dem Stellantrieb 9 verbunden.

Weiterhin kann vorgesehen sein, einen weiteren Ausgang des Reglers 15 mit einer Steuerventilanordnung 16 zu verbinden, worüber gesteuert Sterilgas oder steriles gas- und/oder dampfförmiges Medium von einer Quelle 17 oder einer dieses gas- und/oder dampfförmiges Medium führenden Leitung in den Teilraum 2.2 eingebracht bzw. aus diesem Teilraum 2.2 beispielsweise über ein Filter in die Atmosphäre abgeblasen werden kann. In dem Regler 15 sind als Steuer- oder Regelparameter beispielsweise das der jeweiligen, vom Durchflussmesser 12a gemessenen Durchsatz entsprechende Höhenniveau H1, das dem jeweiligen Höhenniveau H1 entsprechende Niveau H2 bzw. die Niveaudifferenz ΔH, sowie produkt- und/oder anlagenspezifische Parameter usw. abgelegt, so dass die zur Einhaltung der Soll-Heißhaltezeit notwendige Regelung des Produktvolumens im Behälter 1 bzw. des Höhenniveaus H1 sowie die entsprechende Nachführung des Höhenniveaus H2 auch unter Berücksichtigung solcher Parameter in einem geschlossenen Regelkreis selbsttätig in optimaler Weise erreicht werden.

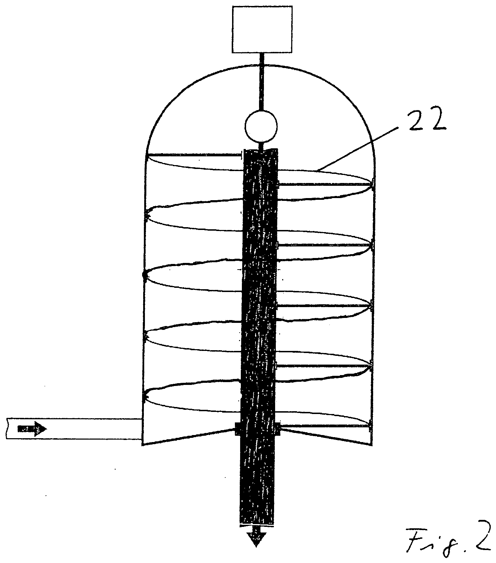

Um die zu verhindern, dass sich innerhalb des Teilraumes 2.1 ein die Soll-Heißhaltezeit nicht einhaltender direkter Produktfluss von der Leitung 4 bzw. von dem von dieser Leitung gebildeten unteren Produkteinlauf an den oberen Auslauf 5 bzw. an das Rohrende 7.1 einstellt, sind in dem Teilraum 2.1 mehrere Schikanen vorgesehen, die von dem Produkt durchströmt werden müssen und insbesondere auch eine gewisse Verwirbelung des Produktes im Teilraum 2.1 bewirken. Bei der dargestellten Ausführungsform sind diese Schikanen von Trennblechen 18 gebildet, die den Teilraum 2.1 in mehrere, in Richtung der Behälterachse BA übereinander angeordnete Einzelräume unterteilen. Die Trennbleche 18 sind jeweils mit einer Vielzahl von Durchtrittsöffnungen 19 für das Produkt versehen, und zwar bevorzugt derart, dass die Durchtrittsöffnungen 19 benachbarter Trennbleche 18 radial zur Behälterachse BA auf Lücke versetzt sind. Auch andere Schikanen sind denkbar, z.B. in Form wenigstens eines wendelförmigen Leitelementes 22 zur Ausbildung einer wendelförmigen Behandlungsstrecke, wie dieses in der Figur 2 dargestellt ist.

Anstelle der Trennbleche 18 können auch andere, eine direkte Produktströmung von der Leitung 4 an den Auslauf 5 verhindernde Schikanen vorgesehen sein.

In Abhängigkeit vom Produktdurchsatz wird erfindungsgemäß auch die Länge der Produktleitung angepasst.

Dazu ist zunächst die bereits oben beschriebene Ausführungsform mit einem, in seiner Höhenposition verstellbaren Rohr 7 vorgesehen, wobei die Außenwandung des Rohres 7 in Verbindung mit den Trennblechen 18 die Länge der Behandlungsstrecke festlegt.

in einer weiteren, nicht dargestellten Ausführungsform ist vorgesehen, dass das Rohr 7 ortsfest, also nicht höhenverstellbar ausgebindet ist. Zur Veränderung der Länge der Behandlungsstrecke sind auf verschiedenen Höhenebenen an der Außenwandung des Rohres 7 verschiedene Öffnungen vorgesehen, welche vorzugsweise unabhängig von einander geöffnet oder auch geschlossen werden können. Durch das gezielte Öffnen einer Öffnung, kann die Behandlungsstrecke auf die gewünschte Länge eingestellt werden. Von besonderem Vorteil bei dieser Ausgestaltung ist, dass das Rohr 7 strömungsdicht mit den Trennblechen 18, oder aber auch mit dem wendelförmigen Leitelement 22 verbunden werden kann, so dass unerwünschte Querströmungen des Produktes sicher vermieden sind.

Durch das beschriebene Verfahren, d.h. durch die Steuerung des Volumens innerhalb des Behälters 1 und/oder die Steuerung der Länge der Behandlungsstrecke in Abhängigkeit von dem Produktdurchsatz werden also die Pasteurisationstemperatur und insbesondere auch die Heißhaltezeit auf für eine effektive Abtötung von produkt- oder getränkeschädigenden Mikroorganismen und/oder Keime optimalen Werten gehalten. Eine übermäßige, die Produktqualität beeinträchtigende Überpasteurisation wird zuverlässig vermieden. Ein weiterer wesentlicher Vorteil besteht auch darin, dass auf Puffertanks zum Zwischenpuffern des sterilen Produktes zwischen der Pasteurisationsanlage und einer nachgeschalteten Füllmaschine verzichtet werden kann.

Die Erfindung wurde voranstehend an einem Ausführungsbeispiel beschrieben. Es versteht sich, dass Änderungen sowie Abwandlungen möglich sind, ohne dass dadurch der der Erfindung zugrundeliegende Erfindungsgedanke verlassen wird.

So wurde vorstehend davon ausgegangen, dass zur Regelung des Produktvolumens bzw. der Länge der Produktleitung, sowie zur Regelung bzw. Nachführung des Höhenniveaus H2 des Produktauslaufs 5 zwei Regler 13 und 15 vorgesehen sind. Selbstverständlich können die Funktionen dieser Regler auch in einem einzigen Regler oder in einer einzigen, beispielsweise mikroprozessor- oder rechnergestützten Steuereinrichtung zusammengefasst sein oder aber die Funktion der beiden Regler 13 und 15 kann beispielsweise in einer Prozesssteuerung realisiert sein, z.B. auch zumindest teilweise softwaremäßig, die (Prozesssteuerung) eine die Pasteurisationsanlage bestehend aus dem nicht dargestellten Erhitzer und dem Pasteurisationsbehälter 1 aufweisende Gesamtanlage steuert oder regelt.

Vorstehend wurde davon ausgegangen, dass zur Regelung des Volumens des Teilraumes 2.1 bzw. des Produktes innerhalb des Behälters 1 das Höhenniveau H1 verändert wird und das Höhenniveau H2 bzw. die Höhendifferenz ΔH nachgeführt werden. Grundsätzlich besteht selbstverständlich auch die Möglichkeit, das Höhenniveau H2 des Auslaufs 5 in Abhängigkeit vom Durchsatz des Produktes zu regeln und das Höhenniveau H1 zur Einhaltung der Niveau- oder Höhendifferenz ΔH nachzuführen.

### Bezugszeichenliste

- 1: Pasteurisationsbehälter
- 2: Behälterinnenraum
- 2.1,2.2: Teilraum
- 3: thermische Isolation
- 4: Produktleitung
- 5: Produktauslauf
- 6: Produktleitung
- 7: Rohr
- 7.1,7.2: Rohrende
- 8: Anschlussstutzen
- 9: Stellantrieb
- 10: Fußelement
- 11: Untergrund
- 12 a, b: Durchflussmesser
- 13: Regler
- 14: Niveausensor
- 15: Regler
- 16: Steuerventilanordnung
- 17: Quelle für Sterilgas
- 18: Trennblech
- 19: Öffnung
- 20: Rechner
- 21: zufördernde Pumpe
- 22: wendelförmiges Leitelement
- A, B: Produktfluss
- C: Verstellhub des Auslaufs 5
- H1, H2: Höhenniveau
- ΔH: Höhendifferenz
- BA: vertikale Behälterachse

## Patentansprüche

1. Verfahren zum Pasteurisieren eines flüssigen Produkts durch Erhitzen auf eine das Abtöten von produktschädigenden Mikroorganismen und/oder Keimen bewirkende Pasteurisationstemperatur sowie durch Halten des Produktes in einem Behandlungsraum (2.1) über eine Heißhaltezeit auf dieser Temperatur, wobei die Lange der Behendlungsstrecke in Abhängigkeit von dem Produktdurchsatz gesteuert oder geregelt wird, **dadurch gekennzeichnet, dass** das Produktvolumen Innerhalb des Behandlungsraumes (2) durch Änderung des Höhenniveaus (H1) des Produktspiegels im Behandlungsraum (2), durch Zuführen oder Abführen eines sterilen gas- und/oder dampfförmigen Mediums in einem über den Produktspiegel gebildeten Teilraums (2.2) des Behandlungsraumes und/oder durch Änderung des Höhenniveaus (H2) des Produktauslaufs (5) im Behandlungsraum (2) gesteuert oder geregelt wird.

2. Verfahren nach Anspruch 1, **dadurch gekennzeichnet, dass** sich die Behandlungsstrecke im inneren eines Pasteurisationsbehälters (1) befindet.

3. Verfahren nach Anspruch 1 oder 2, **dadurch gekennzeichnet, dass** zur Einhaltung einer, von dem Produktdurchsatz unabhängigen Heißhaltezeit das Volumen des Produktes innerhalb des Behandlungsraumes (2) in Abhängigkeit von dem Produktdurchsatz gesteuert oder geregelt wird.

4. Verfahren nach einem der vorhergehenden Ansprüche, **dadurch gekennzeichnet, dass** das Volumen des Produktes im Behandlungsraum (2) in Abhängigkeit vom Produktdurchsatz an einem Einlass (4) und/oder an einem Auslass (5) gesteuert oder geregelt wird.

5. Verfahren nach einem der vorhergehenden Ansprüche, **dadurch gekennzeichnet, dass** das Produktvolumen im Behandlungsraum (2) unter Berücksichtigung von produkt- und/oder anlagenspezifischen Parametern gesteuert oder geregelt wird.

6. Verfahren nach einem der vorhergehenden Ansprüche, **dadurch gekennzeichnet, dass** das Produkt ein Lebensmittel oder Getränk ist

7. Vorrichtung zum Pasteurisieren eines flüssigen Produktes, mit einem von dem Innenraum eines Behälters (1) gebildeten Behandlungsraum (2), dem das auf eine Pasteurisationstemperatur erhitzte Produkt an einem Einlass (4) zugeführt wird, und aus dem das Produkt nach Ablauf einer Heißhaltezeit an einem Produktauslauf (5) entnommen wird oder abfließt, mit Mitteln (12, 13, 15) zur Steuerung oder Regelung des Produktvolumen innerhalb des Behandlungsraumes (2) in Abhängigkeit vom Durchsatz des Produktes durch den Behandlungsraum (2) und mit Mitteln (7, 9,18, 22) zur Steuerung oder Regelung der Länge der Behandlungsstrecke, **dadurch gekennzeichnet, dass** der Behandlungsraum (2) einen unteren, von dem Produkt eingenommenen Teil- oder Produktraum (2.1) und darüber liegend einen mit einem sterilen gas- und/oder dampfförmigen Medium beaufschlagbaren Teil- oder Gasraum (2.2) bildet, und dass das Produktvolumen im Behandlungsraum (2) durch Änderung des Höhenniveaus (H1) des Produktspiegels steuerbar oder regelbar ist.

8. Vorrichtung nach Anspruch 7, **gekennzeichnet durch** eine Steuerventilanordnung (16), über die zur Änderung des Höhenniveaus (H1) des Produktspiegels das sterile gas- und/oder dampfförmige Medium in den Gasraum (2.2) eingeleitet oder aus dem Gasraum (2.2) abgeleitet werden kann.

9. Vorrichtung nach einem der vorhergehenden Ansprüche, **dadurch gekennzeichnet, dass** das Höhenniveau (H2) des Produktauslaufs in Abhängigkeit von dem Produktdurchsatz steuer- oder regelbar ist, und zwar in der Weise, dass zwischen dem Höhenniveau (H1) des Produktspiegels im Behandlungsraum (2) und dem Höhenniveau des Produktauslaufs (5, 7.1) im Behandlungsraum (2) eine Höhen- oder Niveaudifferenz (ΔH) besteht, wobei diese Differenz ihrerseits beispielsweise abhängig von dem Produktdurchsatz steuerbar oder regelbar ist.

10. Vorrichtung nach einem der vorhergehenden Ansprüche, **dadurch gekennzeichnet, dass** der beispielsweise von wenigstens einem Rohrstück (7) gebildete Produktauslauf (5) durch einen Stellantrieb (9) höhenverstellbar ist, und zwar in Abhängigkeit von dem Produktdurchsatz und/oder von dem Produktspiegel im Behandlungsraum (2).

11. Vorrichtung nach einem der vorhergehenden Ansprüche, **gekennzeichnet durch** wenigstens einen Durchflussmesser (12a, 12b) am Produkteinlauf und/oder in einer Leitung (4) zum Zuführen des heißen Produktes und/oder am Produktauslauf und/oder in einer an den Produktauslauf angeschlossenen Leitung (6).

12. Vorrichtung nach einem der vorhergehenden Ansprüche, **dadurch gekennzeichnet, dass** der Produkteinlauf (4) im Bereich eines Bodens (1.3) des Behandlungsraumes (2) und der wenigstens eine Produktauslauf (5) oder wenigstens eine diesen Auslauf bildende Öffnung auf einem Höhenniveau (H2) oberhalb des Produktelnlaufs (4) vorgesehen ist.

13. Vorrichtung nach einem der vorhergehenden Ansprüche, **dadurch gekennzeichnet, dass** der Produktauslauf (5) oder wenigstens eine diesen Produktauslauf bildende Öffnung zentrisch im Behandlungsraum (2) vorgesehen ist.

14. Vorrichtung nach einem der vorhergehenden Ansprüche, **gekennzeichnet durch** wenigstens einen Sensor (14) zur Erfassung des aktuellen Höhenniveaus (H1) des Produktspiegels im Behandlungsraum (2).

15. Vorrichtung nach einem der vorhergehenden Ansprüche, **gekennzeichnet durch** wenigstens einen Regler (13, 15) oder eine Steuereinrichtung zur Steuerung oder Regelung des Höhenniveaus (H1) des Produktspiegels und/oder des Höhenniveaus (H2) des Produktauslaufs (5) in Abhängigkeit von Signalen zumindest des wenigstens einen Durchfiussmessers (12a, 12b) und des wenigstens einen das Niveau des Produktspiegels erfassenden Sensors (14).

16. Vorrichtung nach einem der vorhergehenden Ansprüche, **dadurch gekennzeichnet, dass** dem Behandlungsraum (2) zwischen dem Produkteinlauf (4) und dem Produktauslauf (5) wenigstens eine, die Strömung des Produktes beeinflussende Schikane vorgesehen ist, beispielsweise in Form wenigstens einer mit Öffnungen versehenen Trennwand (18) und/oder in Form wenigstens einer spiralförmigen Strömungsführung und/oder in Form eines wendelförmigen Leitelementes (22).

## Claims

1. Method for pasteurising a liquid product by heating it to a pasteurisation temperature which results in any product-harming micro-organisms and/or germs being killed and by maintaining the product at this temperature in a treatment chamber (2.1) over a holding time, wherein the length of the treatment segment is controlled or regulated as a function of the product throughput, **characterised in that** the product volume inside the treatment chamber (2) is controlled or regulated by changing the height level (H1) of the product surface level in the treatment chamber (2), by introducing or removing a sterile gaseous and/or vaporous medium in a part chamber (2.2) of the treatment chamber, formed above the product surface level, and/or by changing the height level (H2) of the product outlet (5) in the treatment chamber (2).

2. Method according to claim 1, **characterised in that** the treatment segment is located in the interior of a pasteurisation container (1).

3. Method according to claim 1 or 2, **characterised in that**, in order to maintain a hot holding time, independent of the product throughput, the volume of the product inside the treatment chamber (2) is controlled or regulated as a function of the product throughput.

4. Method according to any one of the preceding claims, **characterised in that** the volume of the product in the treatment chamber (2) is controlled or regulated as a function of the product throughput at an inlet (4) and/or at an outlet (5).

5. Method according to any one of the preceding claims, **characterised in that** the product volume in the treatment chamber (2) is controlled and/or regulated by taking account of product-specific and/or system-specific parameters.

6. Method according to any one of the preceding claims, **characterised in that** the product is a foodstuff or beverage.

7. Device for pasteurising a liquid product, with a treatment chamber (2) formed from the interior of a container (1), into which the product heated to a pasteurisation temperature is introduced at an inlet (4), and from which the product is removed or flows out, after the expiry of a hot holding time, at a product outlet (5), with means (12, 13, 15) for controlling or regulating the product volume inside the treatment chamber (2) as a function of the throughput of the product through the treatment chamber (2), and with means (7, 9, 18, 22) for controlling or regulating the length of the treatment segment, **characterised in that** the treatment chamber (2) forms a lower part chamber or product chamber (2.1), occupied by the product, and, above this, a part chamber or gas chamber (2.2) which can be subjected to a sterile gaseous and/or vaporous medium, and that the product volume in the treatment chamber (2) can be controlled or regulated by changing the height level (H1) of the product surface level.

8. Device according to claim 7, characteriaed by a control valve arrangement (16) by means of which, in order to change the height level (H1) of the product surface level, the sterile gaseous and/or vaporous medium can be introduced into the gas chamber (2.2) or can be removed from the gas chamber (2.2).

9. Device according to any one of the preceding claims, **characterised in that** the height level (H2) of the product outlet can be controlled or regulated as a function of the product throughput, and specifically in such a way that a difference in height or level (ΔH) pertains between the height level (H1) of the product surface level in the treatment chamber (2) and the height level of the product outlet (5, 7.1) in the treatment chamber (2), wherein this difference can in turn be controlled or regulated, for example depending on the product throughput.

10. Device according to any one of the preceding claims, **characterised in that** the product outlet (5), formed, for example, from at least one pipe piece (7), can be height-adjusted by means of an actuator (9), and specifically as a function of the product throughput and/or of the product surface level in the treatment chamber (2).

11. Device according to any one of the preceding claims, **characterised by** at least one flow meter (12a, 12b) at the product inlet and/or in a line (4) for delivering the hot product and/or at the product outlet and/or in a line (6) connected to the product outlet.

12. Device according to any one of the preceding claims, **characterised in that** the product inlet (4) is provided in the region of a base (1.3) of the treatment chamber (2), and the at least one product outlet (5), or at least one opening forming this outlet, is provided at a height level (H2) above the product inlet (4).

13. Device according to any one of the preceding claims, **characterised in that** the product outlet (5), or at least an opening forming this product outlet, is provided centrically in the treatment chamber (2).

14. Device according to any one of the preceding claims, **characterised by** at least one sensor (14) for detecting the present height level (H1) of the product surface level in the treatment chamber (2).

15. Device according to any one of the preceding claims, **characterised by** at least one regulator (13, 15) or a control device for controlling or regulating the height level (H1) of the product surface level and/or of the height level (H2) of the product outlet (5) as a function of signals from the at least one flowmeter (12a, 12b) and the at least one sensor detecting the level of the product surface level.

16. Device according to any one of the preceding claims, **characterised in that** at least one chicane or baffle is provided in the treatment chamber (2), between the product inlet (4) and the product outlet (5), which influences the flow of the product, for example in the form of at least one partition wall (18) provided with openings, and/or in the form of at least one spiral-shaped flow guide, and or in the form of a helical conducting element (22).

## Revendications

1. Procédé de pasteurisation d'un produit liquide par chauffage à une température de pasteurisation entraînant la destruction de micro-organismes et/ou germes nocifs pour le produit et par maintien du produit dans un espace de traitement (2.1) pendant un temps de maintien de la chaleur à cette température, dans lequel la longueur du parcours de traitement est commandée ou réglée en fonction du rendement de produit, **caractérisé en ce que** le volume de produit au sein de l'espace de traitement (2) est commandé ou réglé par modification du niveau en hauteur (H1) du niveau de produit dans l'espace de traitement (2), par l'apport ou l'évacuation d'un milieu stérile sous forme de gaz et/ou de vapeur dans un espace partiel (2.2) formé au-dessus du niveau de produit de l'espace de traitement et/ou par modification du niveau en hauteur (H2) de la sortie de produit (5) dans l'espace de traitement (2).

2. Procédé selon la revendication 1, **caractérisé en ce que** le parcours de traitement se trouve à l'intérieur d'un récipient de pasteurisation (1).

3. Procédé selon la revendication 1 ou 2, **caractérisé en ce que**, pour le maintien d'un temps de maintien du chauffage indépendant du rendement de produit, le volume de produit est commandé ou réglé au sein de l'espace de traitement (2) en fonction du rendement de produit.

4. Procédé selon l'une des revendications précédentes, **caractérisé en ce que** le volume du produit dans l'espace de traitement (2) est commandé ou réglé en fonction du rendement de produit au niveau d'une entrée (4) et/ou d'une sortie (5).

5. Procédé selon l'une des revendications précédentes, **caractérisé en ce que** le volume de produit dans l'espace de traitement (2) est commandé ou réglé en tenant compte de paramètres spécifiques du produit et/ou de l'installation.

6. Procédé selon l'une des revendications précédentes, **caractérisé en ce que** le produit est un aliment ou une boisson.

7. Dispositif de pasteurisation d'un produit liquide avec un espace de traitement (2) formé par l'espace intérieur d'un récipient (1), auquel le produit chauffé à une température de pasteurisation est acheminé à une entrée (4), et hors duquel le produit est prélevé ou s'écoule après l'écoulement d'un temps de maintien du chauffage à un orifice de sortie du produit (5), avec des moyens (12, 13, 15) pour la commande ou le réglage du volume de produit au sein de l'espace de traitement (2) en fonction du rendement de produit dans l'espace de traitement (2) et avec des moyens (7, 9, 18, 22) pour la commande ou le réglage de la longueur du parcours de traitement, **caractérisé en ce que** l'espace de traitement (2) forme un espace partiel ou de produit (2.1) inférieur occupé par le produit et sur celui-ci, un espace partiel ou de gaz (2.2) alimenté avec un milieu stérile sous forme de gaz et/ou de vapeur, et **en ce que** le volume de produit peut être commandé ou réglé dans l'espace de traitement (2) par modification du niveau en hauteur (H1) du niveau de produit.

8. Dispositif selon la revendication 7, **caractérisé par** une soupape de commande (16) par laquelle pour la modification du niveau en hauteur (H1) du niveau de produit, le milieu stérile sous forme de gaz et/ou de vapeur peut être conduit dans l'espace de gaz (2.2) ou est évacué de l'espace de gaz (2.2).

9. Dispositif selon l'une des revendications précédentes, **caractérisé en ce que** le niveau en hauteur (H2) de la sortie de produit peut être commandé ou réglé en fonction du rendement de produit, et cela, de telle façon qu'entre le niveau en hauteur (H1) du niveau de produit dans l'espace de traitement (2) et le niveau en hauteur de la sortie de produit (5, 7.1) dans l'espace de traitement (2), il existe une différence de hauteur ou de niveau (ΔH), dans lequel cette différence peut être commandée ou réglée de son côté, par exemple en fonction du rendement de produit.

10. Dispositif selon l'une des revendications précédentes, **caractérisé en ce que** la sortie de produit (5) formée par exemple par au moins une pièce tubulaire (7) peut être décalée en hauteur par un servomoteur (9) et cela, en fonction du rendement de produit et/ou du niveau de produit dans l'espace de traitement (2).

11. Dispositif selon l'une des revendications précédentes, **caractérisé par** au moins un débitmètre (12a, 12b) à l'entrée du produit et/ou dans une conduite (4) pour l'acheminement du produit chaud et/ou à la sortie de produit et/ou dans une conduite (6) raccordée à la sortie de produit.

12. Dispositif selon l'une des revendications précédentes, **caractérisé en ce que** l'entrée de produit (4) est prévue dans la zone d'un fond (1.3) de l'espace de traitement (2) et l'au moins une sortie de produit (5) ou l'au moins une ouverture formant cette sortie est prévue sur un niveau en hauteur (H2) au-dessus de l'entrée de produit (4).

13. Dispositif selon l'une des revendications précédentes, **caractérisé en ce que** la sortie de produit (5) ou au moins une ouverture formant cette sortie de produit est prévue au niveau central dans l'espace de traitement (2).

14. Dispositif selon l'une des revendications précédentes, **caractérisé par** au moins un capteur (14) pour saisir le niveau en hauteur actuel (H1) du niveau de produit dans l'espace de traitement (2).

15. Dispositif selon l'une des revendications précédentes, **caractérisé par** au moins un régulateur (13, 15) ou un système de commande pour la commande ou le réglage du niveau en hauteur (H1) du niveau de produit et/ou du niveau en hauteur (H2) de la sortie de produit (5) en fonction de signaux au moins de l'au moins un débitmètre (12a, 12) et de l'au moins un capteur (14) saisissant le niveau du niveau de produit.

16. Dispositif selon l'une des revendications précédentes, **caractérisé en ce qu'**est prévue, pour l'espace de traitement (2) entre l'entrée de produit (4) et la sortie de produit (5), au moins une chicane influant sur le courant du produit, par exemple sous la forme d'au moins une paroi de séparation (18) dotée d'ouvertures et/ou sous la forme d'au moins un guidage de courant sous forme spiralée et/ou sous la forme d'un élément de conduite (22) sous forme d'hélice.
